# EUROPÄISCHE PATENTANMELDUNG

(11) **EP 1 199 186 A2**
(43) Veröffentlichungstag der Anmeldung: **24.04.2002**
(21) Anmeldenummer: 01124262.5
(22) Anmeldetag: 17.10.2001
(51) Int. Cl.: B42C 19/02

(54) **Verfahren zum Erzeugen von Druckereinstellungsanweisungen**

(30) Priorität: 19.10.2000 US 692645
(71) Anmelder: Heidelberger Druckmaschinen Aktiengesellschaft, 69115 Heidelberg (DE)
(72) Erfinder: Housel, Edward M., Rochester, NY 14624 (US)
(74) Vertreter: Franzen, Peter

(57) **Zusammenfassung**

Die Erfindung betrifft ein Verfahren zum Erzeugen von Einstellungsanweisungen, die in einem Drucksystem (10) mit mindestens einem Weiterverarbeitungsgerät (42) verwendet werden können. Die Erfindung sieht vor, dass ein Bogen mit Einstellungsanweisungen gedruckt wird, welchen der Bediener mit zum Weiterverarbeitungsgerät (42) nimmt, um dort Einstellungen vorzunehmen. Der gedruckte Bogen ermöglicht es, dass dem Bediener ausführlichere, klarere Anweisungen mitgeteilt werden können als es an der Bedienerschnittstelle des Druckers (20) möglich ist. Das Verfahren sieht außerdem vor, dass mindestens ein Druckauftrag während des Einrichtens der Status in ein Wartestadium versetzt wird, bis der Bediener das Einrichten des Systems beendet und den Druckauftrag freigibt.

## Beschreibung

Die vorliegende Erfindung betrifft ein Verfahren zum Erzeugen von Druckereinstellungsanweisungen und zum Steuern eines Druckers mit an diesen angeschlossenen Weiterverarbeitungsgeräten. Insbesondere betrifft die Erfindung ein Verfahren zum Erstellen eines gedruckten Druckanweisungsbogens, auf dem die Einstellungsanweisungen für die an den Drucker angeschlossenen Weiterverarbeitungsgeräte aufgeführt sind und der es dem das Gerät einrichtenden Bediener ermöglicht, den gedruckten Druckanweisungsbogen mit an die Bedienerschnittstelle des Weiterverarbeitungsgeräts zu nehmen und dort die Einstellungsanweisungen einzugeben, ohne dass er die Anweisungen aus dem Gedächtnis eingeben muss. Außerdem ermöglicht es das erfindungsgemäße Verfahren, die Einstellungsanweisungen mit einem bestimmten Druckauftrag zu koordinieren, indem alle Druckaufträge automatisch in ein Wartestadium versetzt werden, bis sie vom Bediener freigegeben werden.

Hochleistungsdrucker und -kopierer sind häufig mit sog. Weiterverarbeitungsgeräten verbunden, z. B. mit Klebebindegeräten, Lochgeräten für Dreifachlochung etc. Jedes dieser mit dem Drucker verbundenen Weiterverarbeitungsgeräte muss für einen bestimmten Druckauftrag eingerichtet werden. Ein Lochgerät kann z. B. mechanische Elemente enthalten, die für einen gegebenen Druckauftrag auf eine vorgegebene Art und Weise angeordnet werden müssen. Die Weiterverarbeitungsgeräte sind mit dem Drucker über aus einer relativ geringen Anzahl von Kabeln bestehende, einfache elektrische Verbindungen verbunden. Daher kann mittels der elektrischen Verbindung zwischen dem Drucker und dem Weiterverarbeitungsgerät ein Papierstau in dem Weiterverarbeitungsgerät oder ein aufgebrauchter Papiervorrat angezeigt werden. Es ist jedoch nicht möglich, mittels dieser elektrischen Verbindung große Datenmengen oder kompliziertere Meldungen an die Logik- und Steuerungseinheit (LCU) zu übermitteln oder von dieser zu empfangen. Das Weiterverarbeitungsgerät kann weiterhin von einem anderen Hersteller stammen als der Drucker, so dass keine oder nur rudimentäre Möglichkeiten bestehen, das Weiterverarbeitungsgerät über die LCU des Druckers zu steuern. Durch diese Einschränkungen ist es bei bekannten Druckersystemen nicht möglich, Einstellungsanweisungen für das Weiterverarbeitungsgerät an der Bedienerschnittstelle des Druckers einzugeben.

Ein Standalone-Netzwerkdrucker erhält seine Duckaufträge über das Netzwerk. Der Druckauftrag kann jedoch auch über die Bedienerschnittstelle eingegeben werden. Unabhängig von der Art der Eingabe des Druckauftrags gibt der Bediener jedoch bestimmte Daten ein, die häufig als Druckauftragsdaten oder Job-Ticket-Daten bezeichnet werden. Diese enthalten in der Regel Informationen über bestimmte Eigenschaften des Druckauftrags und geben z. B. Aufschluss über die Papiergröße, die Handhabung des Papiers und die Weiterverarbeitungsanweisungen, zu denen auch die Einstellungsanweisungen für die zur Fertigstellung des Druckauftrags benötigten Weiterverarbeitungsgeräte gehören. Derartige Einstellungsinformationen werden im Allgemeinen in Form einer Bedienermeldung eingegeben, die an der Bedienerschnittstelle angezeigt wird, wenn der Druckauftrag den Drucker erreicht.

Wenn ein Druckauftrag über eine Netzwerkschnittstelle eingegeben wird, so wird er in eine Druckserver-Warteschleife im Netzwerk gestellt, bis am Raster Image Prozessor (RIP) im Druckersystem ein Bearbeitungszeitfenster frei wird. Wenn der Druckauftrag an die Warteschleife des RIP übertragen wird, so wird dem Druckauftrag eine Druckauftragsnummer zugewiesen, und der RIP erzeugt eine Bedienermeldung, wenn dem Druckauftrag eine solche Meldung zugeordnet ist. Die Einstellungsanweisungen für eine gegebenen Druckauftrag werden an der Bedienerschnittstelle als Bedienermeldung angezeigt. Die Bedienermeldung teilt dem Bediener mit, dass ein bestimmter Druckauftrag das Einrichten eines Weiterverarbeitungsgeräts erfordert, und gibt die jeweiligen Einstellungsparameter des Weiterverarbeitungsgeräts an. Wie bereits erwähnt, werden diese Einstellungsanweisungen eines bestimmten Druckauftrags für das Weiterverarbeitungsgerät zwar an der Bedienerschnittstelle des Druckers angezeigt; es ist jedoch beim gegenwärtigen Stand der Technik nicht möglich, die Einstellungsinformationen für Weiterverarbeitungsgeräte mittels der Bedienerschnittstelle des Druckers einzugeben. Außerdem ermöglichen es typische Bedienerschnittstellen von awayinamanger Druckern nur in begrenztem Unfang (von z. B. 36 Zeichen), Informationen in einer Bedienermeldung anzuzeigen. Dadurch wird die Anzahl von Anweisungen, die zu einem bestimmten Zeitpunkt an der Bedienerschnittstelle angezeigt werden können, stark eingeschränkt. Daher steht dem Bediener nur eine begrenzte Menge an Informationen zur Verfügung, die ferner eventuell in kryptisch abgekürzter Form angezeigt wird, so dass einerseits weniger erfahrene Bediener Schwierigkeiten haben, die Maschine korrekt einzurichten, und andererseits die Fehlerwahrscheinlichkeit aufgrund von Missverständnissen selbst bei erfahrenen Bedienern verhältnismäßig hoch ist.

Bei typischen Druckersystemanordnungen befinden sich die Weiterverarbeitungsgeräte in einer Entfernung von einigen Metern von der Bedienerschnittstelle des Druckers. Daher muss der Bediener die Einstellungsanweisungen an der Bedienerschnittstelle des Druckers lesen, sich die Einstellungsanweisungen für einen oder mehrere Weiterverarbeitungsgeräte innerhalb kurzer Zeit einprägen, zum Weiterverarbeitungsgerät gehen und dort die individuellen Einstellungsanweisungen für den jeweiligen Druckauftrag eingeben. Dies erhöht das Risiko von Bedienerfehlern, da der Bediener die Anweisungen für einen Druckauftrag genau im Gedächtnis behalten und an einem von der Anzeige der Anweisungen entfernten Ort fehlerfrei eingeben muss. Bei der hohen Druckleistung, die Hochgeschwindigkeits- bzw. Hochleistungsdrucksysteme ermöglichen, führen Bedienerfehler beim Einrichten der Weiterverarbeitungsgeräte schnell zur Unbrauchbarkeit ganzer Druckvorgänge, wenn z. B. das Lochgerät falsch eingestellt wird und die Lochung nicht an der gewünschten Stelle erfolgt. Außerdem ist es dem Bediener nicht möglich, die eingegebenen Anweisungen zu überprüfen, ohne den gesamten Vorgang zu wiederholen, d.h. er muss sich erneut zur Bedienerschnittstelle des Druckers begeben, dort die Anweisungen lesen, zurück zum Weiterverarbeitungsgerät gehen und die eingegebenen Anweisungen überprüfen. Abgesehen davon, dass dieser Vorgang die Gefahr von Bedienerfehlern birgt, verlangsamt er die Vorbereitung und Ausführung von Druckaufträgen und damit die Gesamtproduktivität.

Außerdem muss der Bediener die Einrichtung des Weiterverarbeitungsgeräts für mehrere nacheinander durch das Drucksystem mit hoher Geschwindigkeit auszuführende Druckaufträge einzeln vornehmen. Daher besteht die Gefahr, dass der Bediener ein bestimmtes Weiterverarbeitungsgerät für einen bestimmten Druckauftrag einrichtet, während sich noch andere Druckaufträge in der Warteschleife der Markiervorrichtung befinden, die möglicherweise keine Bedienermeldungen erzeugen. Es kann also passieren, dass der Bediener die Weiterverarbeitungsgeräte für den ersten Druckauftrag einrichtet und ein späterer Druckauftrag ausgeführt wird, bevor der Bediener in der Lage ist, die Weiterverarbeitungsgeräte für den späteren Druckauftrag einzurichten, so dass der spätere Druckauftrag unbrauchbar wird.

Daher besteht Bedarf an einem Verfahren zum Einrichten von Weiterverarbeitungsgeräten für einzelne Druckaufträge, bei dem verhindert wird, dass spätere Druckaufträge, die sich bereits in der Warteschleife der Markiervorrichtung befinden, ausgeführt werden, bevor der Bediener die Parameter des Weiterverarbeitungsgeräts für den nächsten Druckauftrag eingestellt hat.

Demgemäß ist es eine Aufgabe der vorliegenden Erfindung, ein verbessertes Verfahren zum Anzeigen von Anweisungen zu schaffen, durch das die erwähnten Nachteile bekannter Verfahren dieser Art beseitigt werden, sowie ein verbessertes Verfahren zum Erzeugen von Einstellungsanweisungen für Weiterverarbeitungsgeräte zu schaffen, durch das die Menge der dem Bediener zur Verfügung stehenden Informationen erhöht wird.

Diese Aufgabe wird mit dem erfindungsgemäßen Verfahren zum Erzeugen von Druckereinstellungsanweisungen gemäß den Merkmalen von Anspruch 1, 5, 7 oder 8 gelöst; weitere Merkmale ergeben sich aus den Unteransprüchen.

Eine Ausführungsform der Erfindung betrifft ein Verfahren zum Ausführen von Einstellungen an einem mit einem elektrofotografischen Drucker verbundenen Weiterverarbeitungsgerät, wobei der Drucker eine Bedienerschnittstelle aufweist, an der ein Einstellungsanweisungen für mindestens ein Weiterverarbeitungsgerät in Form einer Bedienermeldung enthaltender Druckauftrag in den Drucker eingegeben wird. Nach der Eingabe eines solchen Druckauftrags druckt das System automatisch einen Anweisungsbogen, auf dem die vor der Fertigstellung des Druckauftrags vorzunehmenden Einstellungsvorgänge aufgeführt sind, und alle anstehenden Druckaufträge, für die das betreffende Weiterverarbeitungsgerät benötigt wird, werden in ein Wartestadium versetzt. Alternativ können alle Druckaufträge oder auch alle Druckaufträge, die Bedieneranweisungen enthalten, in ein Wartestadium versetzt werden. Anschließend nimmt der Bediener die auf dem gedruckten Anweisungsbogen aufgeführten Einstellungen vor und gibt danach einen Freigabecode ein, um den Druckauftrag im Wartestadium wieder aufzunehmen und die Fortführung des Druckauftrags am Drucker zu ermöglichen.

Gemäß einer weiteren Ausführungsform enthält das Verfahren zusätzliche Schritte, wobei der Drucker auf eine Datenbank von an mindestens einem Weiterverarbeitungsgerät vorzunehmenden Einstellungsanweisungen zugreift, eine Anweisungen für ein bestimmtes Weiterverarbeitungsgerät enthaltende Datei aus der Datenbank aufruft, diese liest und in eine Seitenbeschreibungsdatei umwandelt, die gerastert und in den gedruckten Anweisungsbogen integriert wird.

Gemäß einer zusätzlichen Ausführungsform betrifft die Erfindung ein Verfahren zur Steuerung eines Drucksystems, das als einen Schritt das Empfangen eines Druckauftrags und das Feststellen umfasst, ob der Druckauftrag Bedieneranweisungen enthält. Wenn der Druckauftrag für ein Weiterverarbeitungsgerät bestimmt ist, ermittelt das Drucksystem, ob der Druckauftrag Anweisungen für einen Bediener enthält, die ihn anweisen, bestimmte Einstellungen vorzunehmen. Wenn dies der Fall ist, werden alle Druckaufträge in ein Wartestadium versetzt und ein Anweisungsbogen gedruckt, auf dem die durch den Bediener vorzunehmenden Einstellungen aufgeführt sind. Der Bediener nimmt anschließend diese auf dem gedruckten Anweisungsbogen aufgeführten Einstellungen und gibt nach Beendigung des Einrichtevorgangs einen Code ein, der eine Fortführung der Druckaufträge ermöglicht.

Die Merkmale der vorliegenden Erfindung werden in der folgenden Beschreibung bevorzugter Ausführungsformen in Zusammenhang mit den beigefügten, nachfolgend aufgeführten Zeichnungen näher erläutert.

Es zeigen:
- Fig. 1: eine schematische Darstellung eines Drucksystems mit an diesem angeschlossenen Weiterverarbeitungsgeräten;
- Fig. 2: ein Blockdiagramm der Architektur eines typischen Drucksystems, in dem die vorliegende Erfindung angewandt wird;
- Fig. 3a, b: ein Ablaufdiagramm, das den Betrieb eines typischen Drucksystems darstellt, in dem die vorliegende Erfindung angewandt wird.

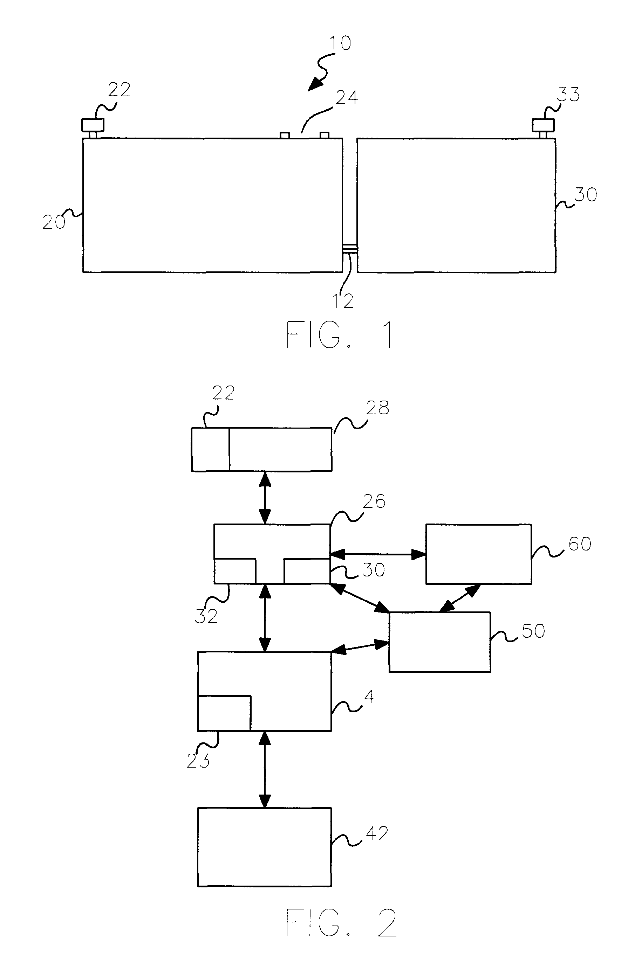

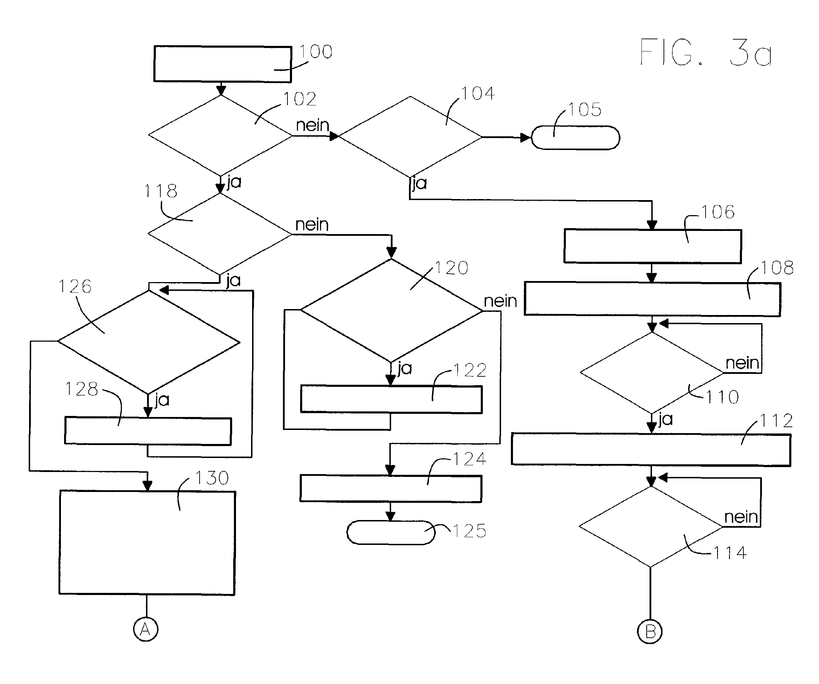

In Fig. 1 und 2 ist ein typisches Drucksystem 10 dargestellt, in dem die vorliegende Erfindung angewandt wird. Das Drucksystem 10 umfasst einen Drucker 20 mit einer Bedienerschnittstelle 22 und einer oberen Bogenausgabe 24. Bei dem beispielhaften Drucksystem 10 handelt es sich um ein Netzwerk-Drucksystem, das dazu geeignet ist, über eine Netzwerkverbindung Eingaben zu erhalten. Es sind jedoch im Rahmen der Erfindung auch andere Konfigurationen denkbar. Bei dem Drucksystem kann es sich z. B. auch um ein Standalone-Drucker handeln, der einen Scanner für das Einlesen von Bildern vor Ort umfasst. Die Erfindung wird hier zwar anhand einer bestimmten Druckerkonfiguration erläutert, kann jedoch auch in Drucksystemen anderer Konfiguration eingesetzt werden.

Der Drucker 20 umfasst einen Raster Image Prozessor (RIP) 26, der eingehende Daten von einem Netzwerk 28 empfängt, mit dem der Drucker 20 verbunden ist. Vor der Weiterleitung an den Raster Image Prozessor 26 kann der Druckauftrag in einer Warteschleife 27 des Druckservers im Netzwerk abgelegt werden. Der Raster Image Prozessor 26 umfasst eine Verarbeitungseinheit 30, die Steuerungsbefehle und Daten vom Netzwerk 28 empfängt. Steuerungsbefehle werden von der Verarbeitungseinheit 30 in eine Maschinesteuersprache übersetzt. Eingehende Druckaufträge und Programmcodes werden in einem Druckauftrags-Zwischenspeicher 32 gespeichert, der im Folgenden auch als RIP-Warteschleife bezeichnet wird.

Der Drucker 20 umfasst weiterhin eine Markiervorrichtung 40, die herkömmliche Papierhandhabungs- und -verarbeitungskomponenten umfasst, wie sie nötig sind, um z. B. Bilder auf dem ausgegebenen Papier zu erzeugen. Die Markiervorrichtung 40 empfängt einen Datenstrom, der von der Verarbeitungseinheit 30 erzeugte Bilddaten und Steuerungsdaten enthält, und speichert diese in einem Mehrseiten-Bildzwischenspeicher 23. Die Bilddaten werden verarbeitet und an einen (nicht gezeigten) Schreibkopf übermittelt, der sie auf das Papier überträgt.

Die Markiervorrichtung 40 umfasst weiterhin Ausgabegeräte, welche die bedruckten Seiten an ein mit dem Drucker 20 über eine einfache elektrische Verbindung verbundenes Weiterverarbeitungsgerät 42 oder mehrere mit dem Drucker 20 über eine einfache elektrische Verbindung verbundene Weiterverarbeitungsgeräte 42 weiterleitet. Das Weiterverarbeitungsgerät 42 umfasst eine Bedienerschnittstelle 42 und kann als ein beliebiges bekanntes Weiterverarbeitungsgerät ausgebildet sein, z. B. als ein Lochgerät oder ein Bindegerät.

Der Drucker 20 umfasst eine Logik- und Steuerungseinrichtung 40 mit einer Bedienerschnittstelle 22 für den Drucker, über die der Bediener Funktionen eingibt und Meldungen vom Drucker 20 empfängt. Der Drucker 20 umfasst ferner eine Datenbank 60, die Standard-Anweisungen enthält und in einem lokalen Speicher gespeichert ist, auf den der RIP zugreift. Die in der Datenbank gespeicherten Anweisungen umfassen z. B. Einstellungsanweisungen für ein bestimmtes Weiterverarbeitungsgerät, welche der Bediener unabhängig von der jeweiligen gewählten Konfiguration in jedem Fall ausführen muss. Im Allgemeinen umfassen diese Anweisungen Angaben dazu, wie ein bestimmtes Weiterverarbeitungsgerät physisch eingerichtet werden soll. Ein Lochgerät kann z. B. Anschläge enthalten, die physisch in eine gewünschte Position verfahren werden müssen, aber von federgespannten Stiften gehalten werden, die vor dem Verfahren der Anschläge entfernt werden müssen. Die gemeinsamen Anweisungen können den Bediener gegebenenfalls auch daran erinnern, die Stromzufuhr zu einem bestimmten Weiterverarbeitungsgerät zu reduzieren, bevor an diesem Einstellungsvorgänge vorgenommen werden.

Da die Standard-Anweisungen in einem lokalen Speicher gespeichert sind, kann der Endnutzer die dort gespeicherten gemeinsamen Anweisungen verändern, damit sie seinen spezifischen Bedürfnissen entsprechen. Die Datenbank umfasst in der Regel eine Datei für jedes handelsübliche Weiterverarbeitungsgerät in der gewünschten Anzahl von Sprachen (Englisch, Französisch, Spanisch etc.), für die jeweils eine separate Datei bereitgestellt wird. Wenn der Bediener in der Praxis einen Text in das Anweisungsfeld des Druckauftrags-Eingabemenüs am Netzwerk eingibt, weist dieser Text den RIP an, die Datei für das in den Anweisungen spezifizierte geeignete Weiterverarbeitungsgerät aufzurufen. Der RIP ruft die Datei auf, liest sie in der für das gewählte Weiterverarbeitungsgerät geeigneten Sprache, übersetzt die Datei in eine Seitenbeschreibungsdatei, die gerastert und in die Bedieneranweisungen integriert wird, die wiederum als Anweisungsbogen gedruckt werden.

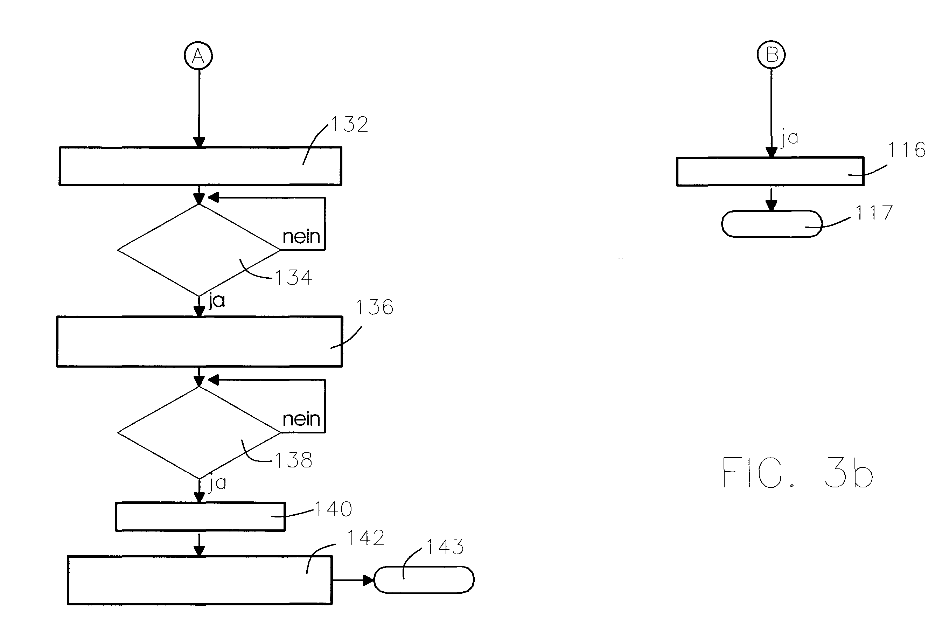

Eine bevorzugte Ausführungsform des erfindungsgemäßen Verfahrens ist durch das in Fig. 3a und Fig 3b gezeigte Ablaufdiagramm dargestellt. Dabei enden Linien, die von Fig. 3a zu Fig 3b übergehen in Fig. 3a in mit Buchstaben gekennzeichneten Kreisen und setzen sich in Fig. 3b aus mit den gleichen Buchstaben gekennzeichneten Kreisen fort. Das Verfahren umfasst das Empfangen eines Druckauftrags vom Netzwerk in Schritt 100. Im Schritt 102 wird abgefragt, ob der Druckauftrag ein Weiterverarbeitungsgerät, z. B. ein Lochgerät oder eine Klebebindeeinrichtung bestimmt. Wenn die Antwort auf Schritt 102 negativ ist, wird im Schritt 104 abgefragt, ob für den Druckauftrag spezielle Anweisungen angegeben sind. Wenn die Antwort auf Schritt 104 negativ ist, geht der Druckauftrag in Schritt 105 über, in dem er an die Markiervorrichtung weitergeleitet und fertiggestellt wird. Wenn jedoch die Antwort auf Schritt 104 positiv ausfällt, werden die Anweisungen in einem Schritt 106 gedruckt, und die Meldung "Warten auf Anweisungen" erscheint in einem Schritt 108 auf der Anzeige der Bedienerschnittstelle des Druckers. In einem Schritt 110 erfolgt eine Abfrage, ob die Anweisungen gedruckt worden sind. Ist die Antwort negativ, wird der Schritt 110 so lange wiederholt, bis die Antwort positiv ist. Daraufhin wird in einem Schritt 112 die Meldung "Auftrag wiederaufnehmen, wenn bereit" an der Bedienerschnittstelle des Druckers angezeigt, worauf der Schritt 114 folgt, in dem abgefragt wird, ob der Druckauftrag wiederaufgenommen wurde. Dieser Schritt 114 wird wiederholt, bis die Antwort positiv ausfällt. Daraufhin wird die Meldung "Auftrag wiederaufgenommen" an der Bedienerschnittstelle des Druckers angezeigt, und der Druckauftrag wird an die Markiervorrichtung weitergeleitet und fertiggestellt.

Wenn die Antwort auf Schritt 102 positiv ist, wird in einem Schritt 118 abgefragt, ob der Druckauftrag Bedieneranweisungen enthält. Wenn die Antwort darauf negativ ist, wird in einem Schritt 120 abgefragt, ob sich ein Weiterverarbeitungsgerät im Wartestadium befindet. Ist dies der Fall, so wird an der Bedienerschnittstelle des Druckers in einem Schritt 122 die Meldung "Wartestadium" angezeigt, und der Schritt 120 wird wiederholt, bis die Antwort negativ ausfällt. Daraufhin wird in einem Schritt 124 an der Bedienerschnittstelle des Druckers die Meldung "Bereit zum Drucken" angezeigt, und der Druckauftrag wird in einem Schritt 125 an die Markiervorrichtung weitergeleitet und fertiggestellt.

Wenn die Antwort auf Schritt 118 positiv ausfällt, wird in einem Schritt 126 abgefragt, ob sich ein Weiterverarbeitungsgerät im Wartestadium befindet. Ist dies der Fall, so wird an der Bedienerschnittstelle des Druckers in einem Schritt 128 die Meldung "Wartestadium" angezeigt, und der Schritt 126 wird wiederholt, bis die Antwort negativ ausfällt. Wenn die Antwort negativ ist, werden alle Druckaufträge, welche für das im Schritt 102 angegebene Weiterverarbeitungsgerät bestimmt sind, ins Wartestadium versetzt, und ein Anweisungsbogen, der die von einem Bediener bei der Eingabe des Druckauftrags in das Netzwerk eingegebenen Anweisungen aufführt, wird gedruckt und in der oberen Ausgabe ausgegeben. In einem Schritt 132 wird eine Meldung "Warten auf Anweisungen" an der Bedienerschnittstelle des Druckers angezeigt. In einem Schritt 134 wird abgefragt, ob der Anweisungsbogen gedruckt wurde. Ist die Antwort auf diesen Schritt negativ, so wird der Schritt 134 wiederholt, bis die Antwort positiv ausfällt, woraufhin in einem Schritt 136 an der Bedienerschnittstelle des Druckers eine Meldung "Wiederaufnehmen, wenn das Weiterverarbeitungsgerät eingerichtet ist" angezeigt wird. In einem Schritt 138 wird abgefragt, ob der Auftrag wiederaufgenommen wurde. Im Falle einer negativen Antwort wird der Schritt 138 wiederholt, bis die Antwort positiv ausfällt. In diesem Fall wird in einem Schritt 140 an der Bedienerschnittstelle des Druckers eine Meldung "Auftrag wiederaufgenommen" angezeigt. In einem Schritt 142 wird das Wartestadium für Druckaufträge, die für das im Schritt 102 spezifizierte Weiterverarbeitungsgerät bestimmt sind, aufgehoben. Der Druckauftrag wird in einem Schritt 143 an die Markiervorrichtung weitergeleitet und fertiggestellt.

Wenn ein Druckauftrag, bei dem kein Text in das Anweisungsfeld des Auftragseinrichtungsmenü im Netzwerk 28 eingegeben wurde, von der Druckserver-Warteschleife an die RIP-Warteschleife 32 weitergeleitet wird, so sendet der RIP 26 den Druckauftrag an die Markiervorrichtung 40, und der Druckauftrag wird fertiggestellt. Gemäß einer Ausführungsform der Erfindung druckt der RIP 26 gemäß der Bedienermeldung den Anweisungsbogen, der an der oberen Ausgabe 24 ausgegeben wird, und der Drucker 20 wird in ein Wartestadium versetzt, das für alle eingehenden Druckaufträge entweder in der Druckerserver-Warteschleife 27 oder in der RIP-Warteschleife 32 gilt. Demgemäß druckt das Drucksystem 10 automatisch den Anweisungsbogen, löst das Wartestadium aus, ohne dass ein Eingriff durch den Bediener notwendig wäre, und bleibt in diesem Status für unbestimmte Zeit, bis der Bediener den Druckauftrag wieder freigibt, nachdem er die notwendigen Einstellungen an dem Weiterverarbeitungsgerät vorgenommen hat.

In einer alternativen Ausführungsform bewirkt der RIP 26, dass die Markiervorrichtung 40 den Anweisungsbogen ausdruckt und das Drucksystem 10 nur dann ins Wartestadium versetzt wird, wenn die Anweisungen ein Weiterverarbeitungsgerät 42 bestimmen. Wenn kein Weiterverarbeitungsgerät 42 gewählt wird, wird der Druckauftrag ohne Eingriff durch das System ausgeführt.

Nachdem der Anweisungsbogen gedruckt wurde und das Drucksystem 10 ins Wartestadium versetzt wurde, entnimmt der Bediener den gedruckten Anweisungsbogen der oberen Ausgabe 24 und bringt den Anweisungsbogen zum Weiterverarbeitungsgerät 42, um ihn beim Einrichten des Weiterverarbeitungsgeräts 42 heranzuziehen. Dadurch ist der Bediener in der Lage, die Anweisungen vom gedruckten Anweisungsbogen abzulesen, während er die notwendigen Einstellungen an dem weiter entfernt aufgestellten Weiterverarbeitungsgerät 42 vornimmt. Auf diese Weise muss er die Anweisungen nicht im Gedächtnis behalten und kann die Einstellungen überprüfen, ohne dass er zurück zur Bedienerschnittstelle 22 des Druckers gehen muss. Sobald die Eingabe der Einstellungsanweisungen an der Bedienerschnittstelle 33 des Weiterverarbeitungsgeräts 42 oder die physischen Einstellungen am Weiterverarbeitungsgerät 42 vorgenommen und gegebenenfalls überprüft worden sind, kehrt der Bediener zur Bedienerschnittstelle 22 des Druckers zurück und gibt den Druckauftrag frei, indem er z. B. durch Berühren der geeigneten Stelle eines Touch Screens der Bedienerschnittstelle 22 oder durch einen Mausklick auf einem Computerbildschirm der Bedienerschnittstelle 22 einen Freigabecode eingibt. Unmittelbar nach der Freigabe schickt der RIP 26 den Druckauftrag an die Markiervorrichtung 40, und der Druckauftrag wird fertiggestellt.

Die vorangegangene eingehende Beschreibung erläutert gegenwärtig bevorzugte Ausführungsformen der Erfindung. Alternativen, die sich dem Fachmann aus den nachfolgenden Ansprüchen ergeben, sowie sämtliche Äquivalente sollen ebenfalls von den beigefügten Ansprüchen erfasst werden.

### Liste der Bezugszeichen

- 10: Drucksystem
- 20: Drucker
- 22: Bedienerschnittstelle
- 23: Zwischenspeicher
- 24: obere Ausgabe
- 26: Raster Image Prozessor
- 27: Druckserver-Warteschleife
- 28: Netzwerk
- 30: Verarbeitungseinheit
- 32: Zwischenspeicher/Warteschleife
- 40: Markiervorrichtung
- 42: Weiterverarbeitungsgerät
- 43: Bedienerschnittstelle
- 50: Logik- und Steuerungseinheit
- 60: Datenbank
- 100, 102, 104, 105, 106, 108, 110, 112, 114, 118, 120, 122, 124, 125, 126, 128, 130, 132, 134, 138, 140, 142, 143: Verfahrensschritte

## Patentansprüche

1. Verfahren zum Vornehmen von Einstellungen an einem mit einem elektrofotografischen Drucker (20) verbundenen Weiterverarbeitungsgerät (42), wobei der Drucker (20) eine Bedienerschnittstelle (22) aufweist,
mit den folgenden Verfahrensschritten:
a) Eingeben eines Einstellungsanweisungen für mindestens ein Weiterverarbeitungsgerät (42) in Form einer Bedienermeldung enthaltenden Druckauftrags in den Drucker (20);
b) automatisches Drucken eines Anweisungsbogens, auf dem die vor der Fertigstellung des Druckauftrags vorzunehmenden Einstellungen aufgeführt sind;
c) automatisches Versetzen aller anstehenden Druckaufträge in ein Wartestadium;
d) Vornehmen der auf dem Anweisungsbogen aufgeführten vor der Fertigstellung des Druckauftrags vorzunehmenden Einstellungen;
e) Eingeben eines Freigabecodes, um das Wartestadium für den Druckauftrag aufzuheben und die Fertigstellung des Druckauftrags am Drucker (20) zu ermöglichen.

2. Verfahren nach Anspruch 1,
mit folgenden weiteren Schritten:
f) Zugreifen auf eine Datenbank (30), die an dem mindestens einen Weiterverarbeitungsgerät (42) vorzunehmende Einstellungsanweisungen enthält;
g) Aufrufen einer Anweisungen für ein bestimmtes Weiterverarbeitungsgerät (42) enthaltenden Datei aus der Datenbank (30);
h) Lesen der Datei; und
i) Übersetzen der Datei in eine Seitenbeschreibungsdatei, die gerastert und in den gedruckten Anweisungsbogen integriert wird.

3. Verfahren nach einem der Ansprüche 1 bis 2,
**dadurch gekennzeichnet,**
**dass** die Eingabe des Druckauftrags über ein Netzwerk (28) erfolgt.

4. Verfahren nach einem der Ansprüche 1 bis 3,
**dadurch gekennzeichnet,**
**dass** es sich in dem Verfahrensschritt c) bei den anstehenden Druckaufträgen, die in Wartestadium versetzt werden um die für das Weiterverarbeitungsgerät (42) bestimmten Druckaufträge handelt.

5. Verfahren zum Handhaben eines Drucksystems (10) mit folgenden Verfahrensschritten:
a) Empfangen eines Druckauftrags;
b) Ermitteln, ob der Druckauftrag für ein Weiterverarbeitungsgerät (42) bestimmt ist und ob der Druckauftrag Anweisungen enthält, welche einen Bediener zum Ausführen bestimmter Einstellungen anweist; wenn dies der Fall ist,
c) Versetzen aller Druckaufträge in ein Wartestadium;
d) Drucken eines Anweisungsbogens, auf dem die von dem Bediener vorzunehmenden Einstellungen aufgeführt sind;
e) Vornehmen der auf dem Anweisungsbogen aufgeführten Einstellungen; und
f) Eingeben eines Codes, welcher das Wartestadium aufhebt und eine Fertigstellung des Druckauftrags ermöglicht.

6. Verfahren nach Anspruch 5,
**dadurch gekennzeichnet,**
**dass** es sich in dem Verfahrensschritt c) bei den anstehenden Druckaufträgen, die in Wartestadium versetzt werden, um die für das Weiterverarbeitungsgerät (42) bestimmten Druckaufträge handelt.

7. Verfahren zur Handhabung eines Drucksystems (10) mit folgenden Schritten:
a) Erstellen eines Druckauftrags mittels eines Erstellungsmenüs, das ein Anweisungsfeld enthält, in das Bedienereinstellanweisungen eingebbar sind;
b) Weiterleiten des Druckauftrags an den Drucker (20);
c) Bestimmen, ob in das Anweisungsfeld Text eingegeben wurde; wenn ja, automatisches Versetzen aller Druckaufträge in ein Wartestadium;
d) Drucken eines Anweisungsbogens, das den in das Bedieneranweisungsfeld eingegebenen Text enthält;
e) Vornehmen der auf dem gedruckten Anweisungsbogen gedruckten Einstellungen;
f) Eingeben eines Codes, der das Wartestadium aufhebt, um die Fertigstellung des Druckauftrags zu ermöglichen.

8. Verfahren zum Handhaben eines Drucksystems mit den folgenden Schritten:
a) Empfangen eines Druckauftrags;
b) Bestimmen, ob der Druckauftrag Bedieneranweisungen enthält;
c) automatisches Versetzen des Druckauftrags in ein Wartestadium, während ein Fortführen anderer Druckaufträge ermöglicht wird;
d) Drucken eines Anweisungsbogens, das den Bedieneranweisungen entspricht;
e) Überprüfen des gedruckten Anweisungsbogens und Vornehmen der auf dem gedruckten Anweisungsbogen aufgeführten Einstellungen;
f) Eingeben eines Codes, der das Wartestadium aufhebt und die Fertigstellung des Druckauftrags ermöglicht.

9. Verfahren nach einem der Ansprüche 4 bis 8,
**dadurch gekennzeichnet,**
**dass** mindestens ein Teil der Einstellungsanweisungen in einem lokalen Speicher gespeichert ist.

10. Verfahren nach einem der Ansprüche 4 oder 9,
**dadurch gekennzeichnet,**
**dass** der Druckauftrag über ein Netzwerk (28) eingeht.

11. Verfahren nach einem der Ansprüche 1 bis 10,
**dadurch gekennzeichnet,**
**dass** der Drucker (20) als eine Standalone-Einheit ausgebildet ist, die einen Scanner umfasst, der dem Drucker (20) Bilddaten liefert.
